(19) Europäisches Patentamt
European Patent Office
Office européen des brevets

(11) **EP 3 969 743 B1**

(12) **EUROPÄISCHE PATENTSCHRIFT**

(45) Veröffentlichungstag und Bekanntmachung des Hinweises auf die Patenterteilung:
**17.12.2025 Patentblatt 2025/51**

(21) Anmeldenummer: **20727212.1**

(22) Anmeldetag: **15.05.2020**

(51) Internationale Patentklassifikation (IPC):
**F03D 1/06** (2006.01)

(52) Gemeinsame Patentklassifikation (CPC):
**F03D 1/0675; F03D 1/0641;** F05B 2240/305;
F05B 2250/70; Y02E 10/72

(86) Internationale Anmeldenummer:
**PCT/EP2020/063713**

(87) Internationale Veröffentlichungsnummer:
**WO 2020/234190 (26.11.2020 Gazette 2020/48)**

(54) **ROTORBLATT UND VERFAHREN ZUM AUSLEGEN EINES ROTORBLATTS EINER WINDENERGIEANLAGE.**

ROTOR BLADE AND METHOD FOR DESIGNING A ROTOR BLADE OF A WIND TURBINE.

PALE DE ROTOR ET MÉTHODE DE CONCEPTION D'UNE PALE DE ROTOR D'UNE EOLIENNE.

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2019 DE 102019113085**

(43) Veröffentlichungstag der Anmeldung:
**23.03.2022 Patentblatt 2022/12**

(73) Patentinhaber: **Wobben Properties GmbH 26607 Aurich (DE)**

(72) Erfinder:
• **MAASS, Hauke 8000 Aarhus (DK)**
• **STEMBERG, Jochen 26607 Aurich (DE)**

(74) Vertreter: **Eisenführ Speiser Patentanwälte Rechtsanwälte PartGmbB Postfach 31 02 60 80102 München (DE)**

(56) Entgegenhaltungen:
WO-A1-2015/185062     WO-A1-2018/046519
DE-A1- 102015 012 427     DE-U1- 202016 101 461
US-A- 5 265 830     US-A1- 2008 240 923
US-A1- 2019 024 627

**Beschreibung**

Die Erfindung betrifft ein Rotorblatt einer Windenergieanlage mit einer Gurney Flap, eine zugehörige Windenergieanlage und ein zugehöriges Verfahren.

Windenergieanlagen sind grundsätzlich bekannt. Moderne Windenergieanlagen betreffen in der Regel sogenannte Horizontalachsen-Windenergieanlagen, bei denen die Rotorachse im Wesentlichen horizontal angeordnet ist und die Rotorblätter eine im Wesentlichen senkrechte Rotorfläche überstreichen. Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist. Der Rotor umfasst in der Regel ein, zwei oder mehrere gleichlange Rotorblätter. Die Rotorblätter sind schlanke Bauteile, die häufig aus faserverstärktem Kunststoff hergestellt sind.

Die Formgebung der Außenkontur der Rotorblätter erfolgt im nabennahen Bereich in der Regel fast ausschließlich aufgrund konstruktiver und struktureller Anforderungen. In einem Bereich angrenzend an den Rotorblattflansch weist ein Rotorblatt in der Regel eine Kreiszylindergeometrie auf. Die Kreiszylindergeometrie ist in der Regel erforderlich, um Pitch-geregelte Rotorblätter zu realisieren. Pitch-geregelte Rotorblätter werden an der Nabe oder anderer Position rotatorisch gelagert, um diese jedenfalls teilweise um ihre Längsachse rotatorisch zu bewegen. Aus strukturellen Gründen kann von dieser Kreiszylindergeometrie in der Regel nicht unmittelbar auf ein aerodynamisch optimales Rotorblattprofil übergegangen werden, da sich bei zu großen Geometriegradienten Lastspitzen in diesem durch Schlag- und Schwenklasten hochbelasteten Blattbereich ausbilden würden. Durch den Fokus auf strukturelle und konstruktive Anforderungen im nabennahen Rotorblattbereich sind die aerodynamischen Eigenschaften hier oftmals nicht optimal. Die existierenden Systeme und Verfahren bieten zwar verschiedene Vorteile, jedoch sind weitere Verbesserungen wünschenswert.

Das Deutsche Patent- und Markenamt hat in der Prioritätsanmeldung zu vorliegender Anmeldung folgenden Stand der Technik recherchiert: DE 20 2016 101 461 U1, US 2015/ 0 267 681 A1, WO 2016/ 055 076 A1.

US 2019/024627 A1 betrifft ein Rotorblatt mit einer abgerundeten Hinterkante und einem sich entlang der Hinterkante erstreckenden länglichen Tab. Der Tab erstreckt sich auf der Druckseite parallel zur Hinterkante.

DE 10 2015 012 427 A1 zeigt ein Rotorblatt für eine Windenergieanlage, das im Blattwurzelbereich eine stumpfe Hinterkante und auf seiner Druckseite einen Hinterkantensteg am Übergang zwischen der Druckseite und der Hinterkante des Rotorblattes aufweisen kann.

WO 2015/185062 A1 betrifft ein Windturbinenblatt, welches als "Flatback-Profil" mit einer im Wesentlichen flachen, die Druck- und Saugseite am Windturbinenblatt verbindenden Hinterkante ausgebildet ist. Das Windturbinenblatt weist entlang seiner flachen Hinterkante auf der Druckseite eine Gurney Flap mit einer über die Rotorblattlänge verlaufenden Höhe auf.

Es ist daher eine Aufgabe der vorliegenden Erfindung, ein Rotorblatt einer Windenergieanlage, eine zugehörige Windenergieanlage und ein zugehöriges Verfahren bereitzustellen, welche einen oder mehrere der genannten Nachteile vermindern oder beseitigen. Insbesondere ist es eine Aufgabe der Erfindung, eine Lösung bereitzustellen, die die aerodynamischen Eigenschaften im nabennahen Bereich eines Rotorblattes verbessert.

Gemäß einem ersten Aspekt wird diese Aufgabe gelöst durch ein Rotorblatt für eine Windenergieanlage mit einer Rotorblattlänge, einer über die Rotorblattlänge verlaufenden Rotorblatttiefe, einer über die Rotorblattlänge verlaufenden Rotorblattdicke und einer über die Rotorblattlänge verlaufenden Dicke einer Hinterkante des Rotorblatts, umfassend eine Gurney Flap mit einer über die Rotorblattlänge verlaufenden Höhe, wobei die Höhe der Gurney Flap in Abhängigkeit der Dicke der Hinterkante derart dimensioniert ist, dass ein Verhältnis aus der Höhe der Gurney Flap und der Dicke der Hinterkante zwischen größer 0% und 25%, insbesondere zwischen 5% und 25%, beträgt.

Der Erfindung liegt die Erkenntnis zu Grunde, dass Gurney Flaps mit einer derartig beschränkten Höhe zu einer überraschend positiven Strömungsbeeinflussung führen. Es ist ferner eine Erkenntnis der vorliegenden Erfindung, dass das Verhältnis aus der Höhe der Gurney Flap und der Dicke der Hinterkante zur aerodynamischen Optimierung eines Rotorblattes, insbesondere eines nabennahen Bereiches eines Rotorblattes, mit besonderem Vorteil verwendet werden kann. Die Erfinder der vorliegenden Erfindung haben insbesondere herausgefunden, dass eine möglichst wirksame Auftriebssteigerung im nabennahen Bereich in besonderer Weise von dem Verhältnis der Höhe der Gurney Flap und der Dicke der Hinterkante abhängen.

Das Rotorblatt erstreckt sich mit einer Rotorblattlänge, einer Rotorblatttiefe und einer Rotorblattdicke. Die Rotorblattlänge ist insbesondere definiert als der Abstand zwischen einem Rotorblattflansch und einer Rotorblattspitze, zwischen denen sich das Rotorblatt erstreckt. Die Rotorblatttiefe ist insbesondere im Wesentlichen orthogonal zu der Rotorblattlänge ausgerichtet. Im Betrieb ist die Rotorblatttiefe im Wesentlichen parallel zur Anströmrichtung des Rotorblattes ausgerichtet. Die Rotorblatttiefe erstreckt sich vorzugsweise zwischen einer Vorderkante und der Hinterkante des Rotorblattes.

Orthogonal zu der Rotorblattlänge und der Rotorblatttiefe erstreckt sich das Rotorblatt in Richtung der Rotorblattdicke. Die Rotorblatttiefe und die Rotorblattdicke spannen an im Wesentlichen jeder Position entlang der Rotorblattlänge ein aerodynamisches Profil, das auch als Profilschnitt verstanden werden kann, auf.

In einem nabennahen Bereich des Rotorblattes weist dieses erfindungsgemäß ein im Folgenden noch näher definiertes Flatbackprofil auf. Ein Flatbackprofil zeichnet sich insbesondere dadurch aus, dass dieses kein auslaufendes, geschlossenes Hinterkantenprofil aufweist. Das Flatbackprofil weicht von der im Wesentlichen tropfenförmigen Form ab und weist eine im Wesentlichen eckige Hinterkantengeometrie auf.

Die Richtung der Dicke der Hinterkante ist im Wesentlichen parallel zu der Rotorblattdicke und orthogonal zu der Rotorblattlänge und orthogonal zu der Rotorblatttiefe ausgerichtet. Eine Dicke der Hinterkante des Rotorblattes kann jedoch auch für solche Profile definiert werden, die abgerundete Ecken oder auch geschlossene Profile, insbesondere in Tropfenform, aufweisen.

Als Dicke der Hinterkante wird insbesondere der Abstand der Profildruckseitenkontur und der Profilsaugseitenkontur am Wurzelpunkt der Gurney Flap orthogonal zur Profilsehne des Rotorblattes verstanden. Konstruktive Rahmenbedingungen, beispielsweise der Lagenaufbau oder die Entformbarkeit aus einer Form, können es erforderlich machen, die Hinterkante des Rotorblattes sowohl druck- als auch saugseitig in abgerundeter Form auszuführen. In diesem Fall ist es vorteilhaft die Gurney Flap in einem Bereich vor der eigentlichen flachen Profilhinterkante zu positionieren. Die im Vorherigen genannte Profildruckseitenkontur und Profilsaugseitenkontur endet vorzugsweise vor der Abrundung. Die Abrundung ist somit insbesondere nicht Teil der Profildruckseitenkontur und der Profilsaugseitenkontur, sodass die Dicke der Hinterkante vor der eigentlichen flachen Hinterkante bestimmt wird.

Das Rotorblatt weist ferner die Gurney Flap auf. Eine Gurney Flap ist insbesondere eine von der Rotorblattoberfläche auskragende Kante. Eine Gurney Flap bewirkt in der Regel, dass die Strömung an der Hinterkante des Rotorblattes beeinflusst wird, vorzugsweise derart, dass ein Druckanstieg vor der Gurney Flap und ein Druckabfall hinter der Gurney Flap entsteht. Die Gurney Flap bewirkt eine Zirkulationserhöhung, wobei der Abströmwinkel, definiert als der Winkel zwischen der Profilsehne und der Richtung der Abströmung, und der Umlenkwinkel, definiert als der Winkel zwischen der Richtung der Anströmung und der Abströmung, gesteigert wird. Der Ablösebereich wird in der Regel hinter die Gurney Flap verlegt. Infolgedessen wird der Auftrieb an dem Rotorblatt und der Widerstand erhöht.

Die Gurney Flap kragt von einer Rotorblattoberfläche aus. Die Höhe der Gurney Flap ist insbesondere als eine Auskraghöhe zu verstehen. Darüber hinaus ist die Höhe der Gurney Flap insbesondere definiert als der Abstand zwischen einem Wurzelpunkt und einem Spitzenpunkt der Gurney Flap. Der Wurzelpunkt der Gurney Flap ist insbesondere der Punkt, an dem die Gurney Flap auf das Rotorblatt trifft. Der Spitzenpunkt der Gurney Flap ist insbesondere als das distale Ende der Gurney Flap zu verstehen. Diese Höhe kann entlang der Rotorblattlänge variieren. Die Höhe der Gurney Flap ist somit vorzugsweise kein konstanter Wert, sondern als Funktion der Rotorblattlänge veränderlich.

Entlang der Rotorblattlänge kann für jeden Profilschnitt ein Verhältnis aus der Höhe der Gurney Flap und der Dicke der Hinterkante bestimmt werden. Der Wert des Verhältnisses aus der Höhe der Gurney Flap und der Dicke der Hinterkante ergibt sich als Ergebnis einer Division der Höhe der Gurney Flap durch die Dicke der Hinterkante. Dieses Verhältnis aus der Höhe der Gurney Flap und der Dicke der Hinterkante ist zwischen größer 0% und 25%. Insbesondere ist es bevorzugt, dass das Verhältnis aus der Höhe der Gurney Flap und der Dicke der Hinterkante zwischen 5% und 25% beträgt.

Ferner kann es bevorzugt sein, dass das Verhältnis aus der Höhe der Gurney Flap und der Dicke der Hinterkante größer 5%, größer 7,5%, größer 10% oder größer 15% beträgt. Ein derartig ungewöhnlich hohes Verhältnis aus der Höhe der Gurney Flap und der Dicke der Hinterkante resultiert in einem überraschend hohen Auftrieb des Rotorblatts. Ferner ist es vorteilhaft, wenn das Verhältnis aus der Höhe der Gurney Flap und der Dicke der Hinterkante größer 5%, größer 7,5%, größer 10% oder größer 15% in einem nabennahen Bereich beträgt, insbesondere zwischen 0% und 50%, vorzugsweise zwischen 3% und 35%, der relativen Blattlänge.

Darüber hinaus ist es bevorzugt, dass das Verhältnis aus der Höhe der Gurney Flap und der Dicke der Hinterkante zwischen größer 0% und 25% in einem nabennahen Rotorblattbereich beträgt. Der nabennahe Rotorblattbereich zeichnet sich vorzugsweise dadurch aus, dass sich dieser von größer gleich 0% bis maximal 35% der relativen Blattlänge erstreckt. Die relative Blattlänge ist vorzugsweise derart definiert, dass diese von 0% bis 100% reicht, wobei 0% ein nabenzugewandtes Ende, beispielsweise den Rotorblattflansch, und 100% die Blattspitze charakterisiert. Bei einer relativen Blattlänge von größer 35%, insbesondere größer 50% geht das Verhältnis aus der Höhe der Gurney Flap und der Dicke der Hinterkante vorzugsweise gegen null. Insbesondere kann dies hin zur Blattspitze der Fall sein.

Eine vorteilhafte Fortbildung des Rotorblattes zeichnet sich dadurch aus, dass das Verhältnis aus der Höhe der Gurney Flap und der Dicke der Hinterkante ausgehend von einem Rotorblattflansch oder ausgehend von einem Bereich angrenzend an den Rotorblattflansch auf einen Maximalwert ansteigt.

Die Höhe der Gurney Flap wird entlang der Rotorblattlänge vorzugsweise so dimensioniert, dass das Verhältnis aus der Höhe der Gurney Flap und der Dicke der Hinterkante hin zu der Blattspitze zunächst ansteigt. Die Gurney Flap erstreckt sich vorzugsweise von einem inneren Ende zu einem äußeren Ende, wobei das innere Ende dem Rotorblattflansch zugewandt ist und das äußere Ende der Rotorblattspitze zugewandt ist. Ausgehend von dem inneren Ende steigt das Verhältnis der Höhe der Gurney Flap zu der Dicke der Hinterkante hin zu einem Maximum dieses Verhältnisses an. Von diesem Maximum ausgehend hin zu dem äußeren Ende der Gurney Flap sinkt das Verhältnis aus der Höhe der Gurney Flap zu der Dicke der Hinterkante vorzugsweise wieder ab. Das Maximum des Verhältnisses kann auch am äußeren Ende der Gurney Flap auftreten.

Das Verhältnis kann unmittelbar vom Rotorblattflansch ausgehend ansteigen oder ausgehend von einem Bereich angrenzend an den Rotorblattflansch. Dies bedeutet insbesondere, dass die Gurney Flap nicht zwingendermaßen direkt am Rotorblattflansch beginnt, sondern auch beabstandet von dem Rotorblattflansch beginnen kann. Diese Beabstandung kann beispielsweise 3% der Rotorblattlänge betragen.

In einer bevorzugten Ausführungsvariante des Rotorblattes ist vorgesehen, dass der Maximalwert des Verhältnisses aus der Höhe der Gurney Flap und der Dicke der Hinterkante zwischen 5% bis 15%, vorzugsweise zwischen 6% bis 12%, der relativen Blattlänge erreicht wird.

Der Maximalwert dieses Verhältnisses wird vorzugsweise zwischen 5% und 15% der relativen Blattlänge erreicht. Dies bedeutet beispielsweise bei einem Rotorblatt mit einer Rotorblattlänge von 80 Metern, dass der Maximalwert des Verhältnisses aus der Höhe der Gurney Flap und der Dicke der Hinterkante zwischen 4 Metern und 12 Metern Beabstandung von dem Rotorblattflansch erreicht wird. Insbesondere ist es bevorzugt, dass dieser Maximalwert des Verhältnisses 4,8 Meter bis 8,8 Meter von dem Rotorblattflansch beabstandet ist.

Gemäß einer weiteren bevorzugten Ausführungsvariante des Rotorblattes ist vorgesehen, dass die Gurney Flap zwischen 3% und 35% der relativen Blattlänge an dem Rotorblatt angeordnet ist.

Das innere Ende der Gurney Flap ist bei dieser Ausführungsvariante beabstandet von dem Rotorblattflansch. Das innere Ende der Gurney Flap kann beispielsweise bei 3% der relativen Blattlänge angeordnet sein. Das innere Ende der Gurney Flap kann jedoch auch mehr als 3% der relativen Blattlänge von dem Rotorblattflansch beabstandet sein. Das äußere Ende der Gurney Flap kann bei 35% der relativen Blattlänge angeordnet sein. Es ist darüber hinaus bevorzugt, dass das äußere Ende der Gurney Flap bei 50%, oder weniger als 50%, insbesondere bei weniger als 35% der relativen Blattlänge angeordnet ist, beispielsweise bei 30%.

Die Gurney Flap erstreckt sich vorzugsweise vom inneren Ende hin zum äußeren Ende mit einer Gurney Flap Länge. Die Gurney Flap Länge beträgt vorzugsweise zwischen größer 0% und 50%, weiter bevorzugt zwischen größer 0% und 30%, ferner bevorzugt zwischen 10% und 25% der relativen Blattlänge. Ferner ist es bevorzugt, dass die Gurney Flap Länge kleiner gleich 50% der relativen Blattlänge beträgt.

Eine weitere bevorzugte Fortbildung des Rotorblattes zeichnet sich dadurch aus, dass die Gurney Flap an einer Druckseite des Rotorblatts angeordnet ist.

Rotorblätter weisen in der Regel eine Druckseite und eine Saugseite auf. Die Druckseite ist insbesondere die Seite des Rotorblattes, an der die Strömungsgeschwindigkeit im Vergleich zu der Saugseite gering und der Druck hoch ist.

In einer weiteren bevorzugten Ausführungsvariante des Rotorblattes ist vorgesehen, dass ein von einer der Hinterkante gegenüberliegend angeordneten Vorderkante des Rotorblatts ausgehend bestimmter Winkel zwischen der Höhe der Gurney Flap und einer Profilsehne des Rotorblatts zwischen 90° und 170° beträgt, insbesondere mindestens 100°, vorzugsweise mindestens 110°.

Die Profilsehne wird im Profilschnitt vorzugsweise derart definiert, dass diese die Verbindungslinie zwischen dem Mittelpunkt der Hinterkante und der Vorderkante ist. Der Mittelpunkt der Hinterkante ist vorzugsweise der Punkt auf der Hinterkante, der die gleiche Beabstandung von der Druckseite und von der Saugseite aufweist. Unter der Vorderkante wird insbesondere der Punkt der Profilaußenkontur verstanden, der von dem Mittelpunkt der Hinterkante die maximale Entfernung aufweist.

Bei einem Winkel zwischen der Höhe der Gurney Flap und der Profilsehne des Rotorblattes von 90° kragt diese im Profilschnitt nach unten aus, wobei die Auskragrichtung im Wesentlichen parallel zur Rotorblattdicke ausgerichtet ist. Wenn dieser Winkel größer 90° gewählt ist erstreckt sich die Gurney Flap von der Vorderkante hinweg.

Gemäß einer weiteren bevorzugten Fortbildung des Rotorblattes ist vorgesehen, dass ein Verhältnis aus der Höhe der Gurney Flap und der Rotorblatttiefe an einem Profilschnitt der Rotorblattlänge mehr als 1%, mehr als 2% und/oder mehr als 5% beträgt.

Insbesondere ist es bevorzugt, dass an einer beliebigen Position zwischen 0% und 35% der relativen Blattlänge, insbesondere zwischen 3% bis 35%, ein Verhältnis aus der Höhe der Gurney Flap und der Rotorblatttiefe mehr als 1%, mehr als 2% und/oder mehr als 5% beträgt. Ferner kann es bevorzugt sein, dass an einer beliebigen Position zwischen 0% und 35% der relativen Blattlänge, insbesondere zwischen 3% bis 35%, ein Verhältnis aus der Höhe der Gurney Flap und der Rotorblatttiefe mehr als 10% und/oder mehr als 15% beträgt. Insbesondere ist es bevorzugt, dass an einer beliebigen Position zwischen 0% und 35% der relativen Blattlänge, insbesondere zwischen 3% bis 35%, ein Verhältnis aus der Höhe der Gurney Flap und der Rotorblatttiefe zwischen 1% und 20%, vorzugsweise zwischen 2% und 15%, insbesondere zwischen 5% und 15% beträgt.

In einer weiteren bevorzugten Ausführungsvariante des Rotorblattes ist vorgesehen, dass das Verhältnis aus der Höhe der Gurney Flap und der Dicke der Hinterkante in einem Bereich zwischen 0% und 5% der relativen Blattlänge zwischen 4% und 25%, insbesondere zwischen 10% und 21%, beträgt; und/oder in einem Bereich zwischen 5% und 10% der relativen Blattlänge zwischen 4% und 25%, insbesondere zwischen 12% und 22%, beträgt; und/oder in einem Bereich zwischen 10% und 15% der relativen Blattlänge zwischen 0% und 25%, insbesondere zwischen 13% und 20%, beträgt;

und/oder in einem Bereich zwischen 15% und 20% der relativen Blattlänge zwischen 0% und 23%, insbesondere zwischen 10% und 18%, beträgt; und/oder in einem Bereich zwischen 20% und 25% der relativen Blattlänge zwischen 0% und 20%, insbesondere zwischen 0% und 15%, beträgt; und/oder in einem Bereich zwischen 25% und 30% der relativen Blattlänge zwischen 0% und 15%, insbesondere zwischen 0% und 10%, beträgt; und/oder in einem Bereich zwischen 30% und 35% der relativen Blattlänge zwischen 0% und 10% beträgt.

Zwischen 0% und 5% der relativen Blattlänge beträgt das Verhältnis aus der Höhe der Gurney Flap und der Dicke der Hinterkante somit vorzugsweise zwischen 4% und 25%. Die Gurney Flap kann beispielsweise ein inneres Ende bei 3% der relativen Blattlänge aufweisen und eine Höhe aufweisen, sodass ein Verhältnis aus der Höhe der Gurney Flap und der Dicke der Hinterkante 10% beträgt.

Die Bereichsangaben für das Verhältnis aus der Höhe der Gurney Flap und der Dicke der Hinterkante gelten für jeden Profilschnitt im angegebenen Bereich der relativen Blattlänge. Bei den angegebenen Werten für das Verhältnis aus der Höhe der Gurney Flap und der Dicke der Hinterkante handelt es sich um konkrete Einzelwerte an einer definierten Position im angegebenen Bereich, also vorzugsweise für einen Profilschnitt.

Das Verhältnis aus der Höhe der Gurney Flap und der Dicke der Hinterkante bestimmt sich vorzugsweise mittels einer quadratischen Funktion. Insbesondere ist es bevorzugt, dass das Verhältnis aus der Höhe der Gurney Flap und der Dicke der Hinterkante in einem Auslegungsbereich liegt, wobei der Auslegungsbereich durch eine obere Grenzwertkurve $f_{max}$ und durch eine untere Grenzwertkurve $f_{min}$ definiert wird. Vorzugsweise bestimmen sich die Grenzwertkurven durch eine Funktion der folgenden Form:

$$f\left(\frac{z}{Z}\right) = a * \left(\frac{z}{Z}\right)^2 + b * \left(\frac{z}{Z}\right) + c$$

In diesem Zusammenhang stellt r/R die relative Radiusposition dar, es handelt sich um die relative Radiusposition unter Berücksichtigung der Rotorblattnabe. Bezugslänge ist demnach der gesamte Rotorradius unter Berücksichtigung der Rotorblattnabe und der Rotorblattlänge. r ist beispielsweise die Beabstandung der betrachteten Position in Metern von der Rotationsachse des Rotors und R ist die Summe aus Rotorblattlänge und Abstand vom Blattflansch bis zur Rotationsachse. z/Z stellt in dem oben genannten Zusammenhang die relative Blattlänge dar. z ist beispielsweise die Beabstandung der betrachteten Position in Metern von dem Blattflansch und Z ist die Rotorblattlänge.

Für die obere Grenzwertkurve $f_{max}$ ist es bevorzugt, dass der Wert a einen Minimalwert von -5, oder -4, oder -3, oder -2,5 aufweist. Ferner ist es bevorzugt, dass für die obere Grenzwertkurve $f_{max}$ der Wert a einen Maximalwert von -2,5, oder -2, oder -1, oder 0 aufweist. Für die obere Grenzwertkurve $f_{max}$ ist es bevorzugt, dass der Wert b einen Minimalwert von -1, oder 0, oder 0,3 aufweist. Ferner ist es bevorzugt, dass für die obere Grenzwertkurve $f_{max}$ der Wert b einen Maximalwert von 0,2, oder 0,3, oder 0,5, oder 1 aufweist. Für die obere Grenzwertkurve $f_{max}$ ist es bevorzugt, dass der Wert c einen Minimalwert von 0, oder 0,1, oder 0,2, oder 0,3 aufweist. Ferner ist es bevorzugt, dass für die obere Grenzwertkurve $f_{max}$ der Wert c einen Maximalwert von 0,2, oder 0,3, oder 0,4, oder 1 aufweist.

Für die untere Grenzwertkurve $f_{min}$ ist es bevorzugt, dass der Wert a einen Minimalwert von -10, oder -8, oder -5, oder -3 aufweist. Ferner ist es bevorzugt, dass für die untere Grenzwertkurve $f_{min}$ der Wert a einen Maximalwert von -5, oder -4, oder -3, oder 0 aufweist. Für die untere Grenzwertkurve $f_{min}$ ist es bevorzugt, dass der Wert b einen Minimalwert von 0, oder 0,3, oder 0,5 aufweist. Ferner ist es bevorzugt, dass für die untere Grenzwertkurve $f_{min}$ der Wert b einen Maximalwert von 0,3, oder 0,5, oder 0,6, oder 1 aufweist. Für die untere Grenzwertkurve $f_{min}$ ist es bevorzugt, dass der Wert c einen Minimalwert von 0, oder 0,01, oder 0,02, oder 0,03, oder 0,04, oder 0,05 aufweist. Ferner ist es bevorzugt, dass für die untere Grenzwertkurve $f_{min}$ der Wert c einen Maximalwert von 0,02, oder 0,03, oder 0,04, oder 0,1 aufweist.

Gemäß der Erfindung ist vorgesehen, dass das Rotorblatt ein Flatbackprofil mit oder ohne abgerundete Kantenbereiche aufweist und die Dicke der Hinterkante als Abstand zwischen einer Profilkontur der Druckseite und einer Profilkontur der Saugseite orthogonal zu der Profilsehne definiert ist.

Bei abgerundeten Kantenbereichen sind die Abrundungen vorzugsweise nicht Teil der Profilkontur der Druckseite und/oder der Saugseite. Die Gurney Flap ist bei einem Flatbackprofil mit abgerundeten Kantenbereichen vorzugsweise am Übergang der Profilkontur der Druckseite hin zum abgerundeten Kantenbereich angeordnet. Darüber hinaus kann die Gurney Flap auch von dieser Position hin zur Profilkontur der Druckseite oder auch in den abgerundeten Kantenbereich hinein angeordnet sein.

Darüber hinaus ist es bevorzugt, dass das Rotorblatt ein geschlossenes Profil aufweist und die Dicke der Hinterkante als Abstand zwischen einer Profilkontur der Druckseite und einer Profilkontur der Saugseite orthogonal zu der Profilsehne an der Stelle der Rotorblatttiefe definiert ist, an der im Betrieb eine freie Druckseitenströmung vorherrscht, wobei vorzugsweise diese Stelle durch den Wurzelpunkt der Gurney Flap definiert ist.

Unter einem geschlossenen Profil ist die übliche, im Prinzip im Wesentlichen tropfenförmige Geometrie eines Rotorblattquerschnitts zu verstehen. Insbesondere wird unter einem geschlossenen Profil ein Profil verstanden, das eine auslaufende Hinterkante aufweist und somit unmittelbar an der Hinterkante keine wesentliche Dicke der Hinterkante feststellbar ist.

Bei dem geschlossenen Profil wird die Dicke der Hinterkante als Abstand zwischen der Profilkontur der Druckseite und der Profilkontur der Saugseite orthogonal zu der Profilsehne an der Stelle der Rotorblatttiefe verstanden, an der im Betrieb eine freie Druckseitenströmung vorherrscht. Die freie Druckseitenströmung herrscht im relevanten Betriebsbereich insbesondere bis zu der Stelle, an der eine druckseitige Strömungsablösung auftritt und an der eine Gurney Flap bevorzugt angeordnet wird. Ein relevanter Betriebsbereich ist beispielsweise definiert vom Teillastbereich bei optimaler Schnelllaufzahl bis zum Erreichen der Nennleistung. Bei einem geschlossenen Profil kann die Dicke der Hinterkante als Abstand zwischen der Profilkontur der Druckseite und der Profilkontur der Saugseite orthogonal zu der Profilsehne an der Stelle der Rotorblatttiefe verstanden werden, an der die Gurney Flap angeordnet ist.

Eine Druckseitenablösung erfolgt bei Profilschnitten mit hohen relativen Dicken an der Stelle, wo eine vollständige Umströmung des Rotorblattes auf der Druckseite nicht mehr gewährleistet ist.

Gemäß einer weiteren bevorzugten Fortbildung umfasst das Rotorblatt einen Übergangsbereich, wobei der Übergangsbereich aus einem Abschnitt mit einem Flatbackprofil und einem Abschnitt mit einem Kreiszylinderprofil besteht, wobei der Abschnitt mit dem Kreiszylinderprofil dem Rotorblattflansch zugewandt ist, und wobei die Gurney Flap in dem Übergangsbereich angeordnet ist.

Der Übergangsbereich umfasst vorzugsweise den Rotorblattflansch und/oder einen Blattanschluss. Das Kreiszylinderprofil eines Rotorblattes zeichnet sich insbesondere dadurch aus, dass dieses einen Auftriebsbeiwert von im Wesentlichen Null aufweist. Folglich ist es insbesondere in diesem Bereich bevorzugt, die Auftriebsbeiwert verbessernde Gurney Flap anzuordnen. Insbesondere durch das im Vorherigen genannte Verhältnis aus der Höhe der Gurney Flap und der Dicke der Hinterkante kann hier eine Optimierung ermöglicht werden. Unter der Dicke der Hinterkante bei einem Kreiszylinderprofil wird insbesondere der Durchmesser des Kreiszylinders verstanden.

Eine weitere bevorzugte Ausführungsvariante des Rotorblattes sieht vor, dass sich die Gurney Flap in Richtung der Höhe von einem Wurzelpunkt zu einem Spitzenpunkt erstreckt, und/oder die Gurney Flap orthogonal zu der Richtung der Höhe eine Dicke aufweist, die im Wesentlichen parallel zu der Profilsehne des Rotorblatts ausgerichtet ist, und/oder sich die Gurney Flap orthogonal zu der Richtung der Höhe und orthogonal zu der Dicke in einer Längsrichtung erstreckt, und vorzugsweise durch die Erstreckung in Längsrichtung und die Höhe eine flächige Erstreckung ausgebildet wird.

Unter der Dicke der Gurney Flap ist insbesondere die Materialstärke des Materials der Gurney Flap zu verstehen. Die Längsrichtung der Gurney Flap kann gerade, gebogen oder geschwungen ausgebildet sein.

In einer weiteren bevorzugten Ausführungsvariante des Rotorblattes ist vorgesehen, dass dieses einen Blattadapter und/oder eine Blattverlängerung umfasst, wobei der Blattadapter und/oder die Blattverlängerung den Rotorblattflansch aufweist bzw. aufweisen.

Gemäß einem weiteren Aspekt wird die eingangs genannte Aufgabe gelöst durch eine Windenergieanlage, umfassend ein Rotorblatt nach einer der im Vorherigen erläuterten Ausführungsvarianten.

Gemäß einem weiteren Aspekt wird die eingangs genannte Aufgabe gelöst durch einen Windpark mit mindestens zwei Windenergieanlagen nach dem vorherigen Aspekt.

Gemäß einem weiteren Aspekt wird die eingangs genannte Aufgabe gelöst durch ein Verfahren zum Auslegen eines Rotorblatts einer Windenergieanlage mit einer Rotorblattlänge, einer über die Rotorblattlänge verlaufende Rotorblatttiefe, einer über die Rotorblattlänge verlaufende Rotorblattdicke und einer über die Rotorblattlänge verlaufende Dicke einer Hinterkante des Rotorblatts, umfassend eine Gurney Flap mit einer über die Rotorblattlänge verlaufenden Höhe, wobei die Höhe der Gurney Flap in Abhängigkeit der Dicke der Hinterkante derart dimensioniert wird, dass ein Verhältnis aus der Höhe der Gurney Flap und der Dicke der Hinterkante zwischen größer 0% und 25%, insbesondere zwischen 5% und 25%, beträgt, und wobei das Rotorblatt ein Flatbackprofil mit oder ohne abgerundete Kantenbereiche aufweist und die Dicke der Hinterkante als Abstand zwischen einer Profilkontur der Druckseite und einer Profilkontur einer Saugseite orthogonal zu der Profilsehne definiert ist.

Das Verfahren und seine möglichen Fortbildungen weisen Merkmale beziehungsweise Verfahrensschritte auf, die sie insbesondere dafür geeignet machen, für das Rotorblatt gemäß dem ersten Aspekt und seine Fortbildungen verwendet zu werden. Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Rotorblattes verwiesen.

Bevorzugte Ausführungsbeispiele werden exemplarisch anhand der beiliegenden Figuren erläutert. Es zeigen:

Figur 1:     eine schematische, dreidimensionale Ansicht einer Windenergieanlage;

Figur 2:     eine schematische, dreidimensionale Ansicht einer Ausführungsform eines Rotorblattes;

Figuren 3-5:   Draufsichten auf das in Figur 2 gezeigte Rotorblatt;

Figur 6:     eine schematische, zweidimensionale Ansicht einer weiteren Ausführungsform eines Rotorblattes mit einem Flatbackprofil;

Figur 7: eine schematische, zweidimensionale Ansicht eines Rotorblattes mit einem Flatbackprofil mit abgerundeten Ecken;

Figur 8: eine schematische, zweidimensionale Ansicht eines nicht zur Erfindung zählenden Rotorblattes mit einem geschlossenen Profil; und

Figur 9: eine schematische Ansicht eines Auslegungsbereiches für das Verhältnis aus der Höhe der Gurney Flap und der Dicke der Hinterkante.

In den Figuren sind gleiche oder im Wesentlichen funktionsgleiche beziehungsweise -ähnliche Elemente mit den gleichen Bezugszeichen bezeichnet.

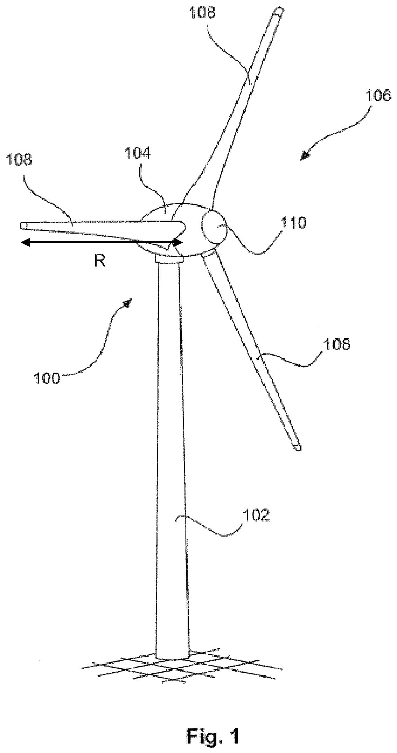

Figur 1 zeigt eine schematische, dreidimensionale Ansicht einer Windenergieanlage 100. Die Windenergieanlage 100 weist einen Turm 102 und eine Gondel 104 auf dem Turm 102 auf. An der Gondel 104 ist ein aerodynamischer Rotor 106 mit drei Rotorblättern 108, die jeweils eine Rotorblattlänge R aufweisen, und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie.

Die Pitchwinkel der Rotorblätter 108 können durch Pitchmotoren an den Rotorblattwurzeln der jeweiligen Rotorblätter 108 verändert werden. Die Rotorblätter 108 weisen eine über die Rotorblattlänge R verlaufende Dicke einer Hinterkante auf. Die Rotorblätter 108 weisen darüber hinaus hier nicht erkennbare Gurney Flaps mit einer über die Rotorblattlänge R verlaufenden Höhe auf. Die Höhe der Gurney Flaps ist in Abhängigkeit der Dicke der Hinterkanten dimensioniert, und zwar derart, dass ein Verhältnis aus der Höhe der Gurney Flaps und der Dicke der Hinterkante zwischen größer 0% und 25%, insbesondere zwischen 5% und 25%, beträgt.

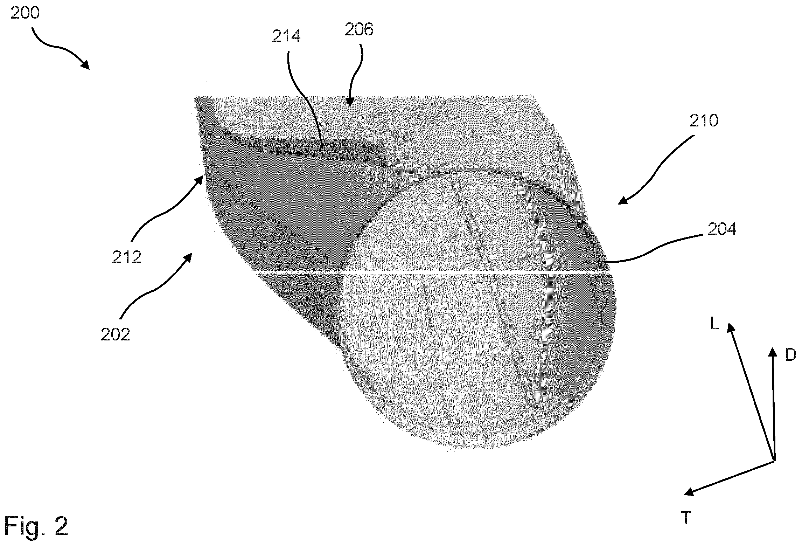

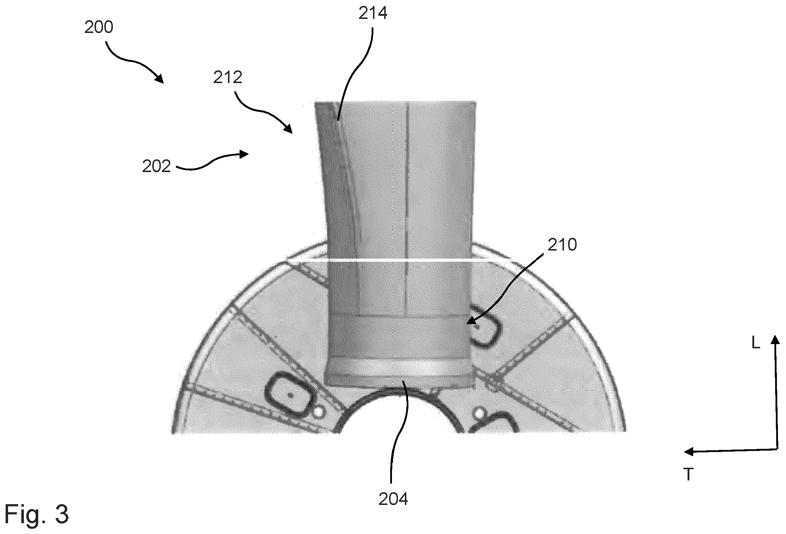

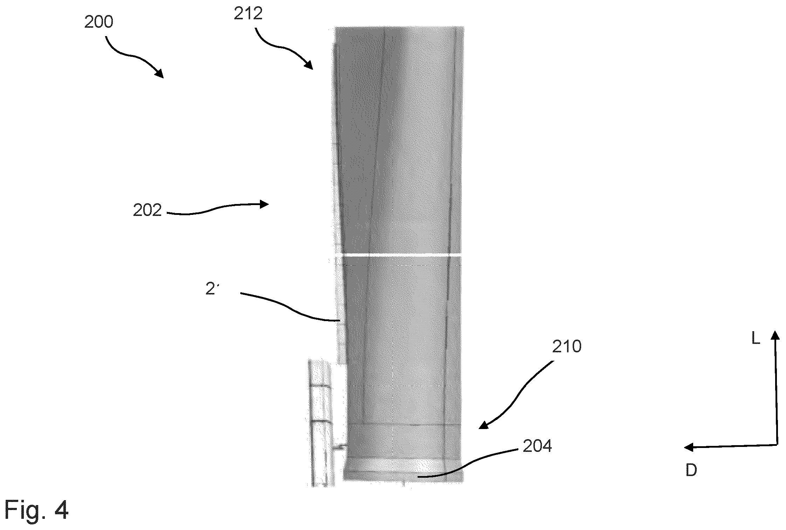

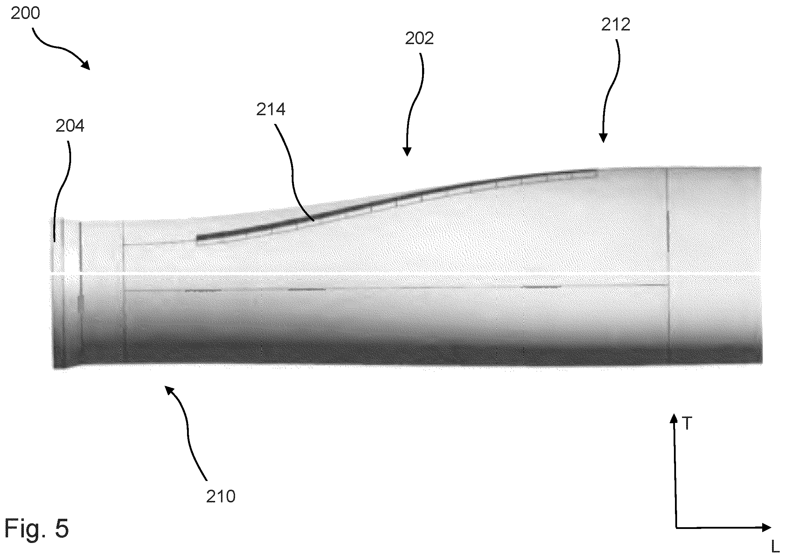

Die Figuren 2 bis 5 zeigen schematische, dreidimensionale Ansichten einer weiteren Ausführungsform eines Rotorblattes 200. Das Rotorblatt 200 erstreckt sich in Längsrichtung L von einem Rotorblattflansch 204 hin zu einer nicht gezeigten Rotorblattspitze. Orthogonal zur Längsrichtung L erstreckt sich das Rotorblatt mit einer Rotorblatttiefe T und orthogonal zu der Rotorblattlänge L und orthogonal zu der Rotorblatttiefe T mit einer Rotorblattdicke D.

In einem Bereich angrenzend an den Rotorblattflansch 204 weist das Rotorblatt 200 ein Kreiszylinderprofil 210 auf. An einer dem Rotorblattflansch 204 abgewandten Seite des Kreiszylinderprofils 210 weist das Rotorblatt 200 ein Flatbackprofil 212 auf. In einem Übergangsbereich, der aus einem Abschnitt mit dem Kreiszylinderprofil 210 und aus einem Abschnitt mit dem Flatbackprofil 212 besteht, weist das Rotorblatt 200 eine Gurney Flap 214 auf. Die Gurney Flap 214 ist an der Druckseite 206 des Rotorblattes 200 angeordnet. Insbesondere ist die Gurney Flap 214 angrenzend an eine Hinterkante 202 des Rotorblattes 200 angeordnet.

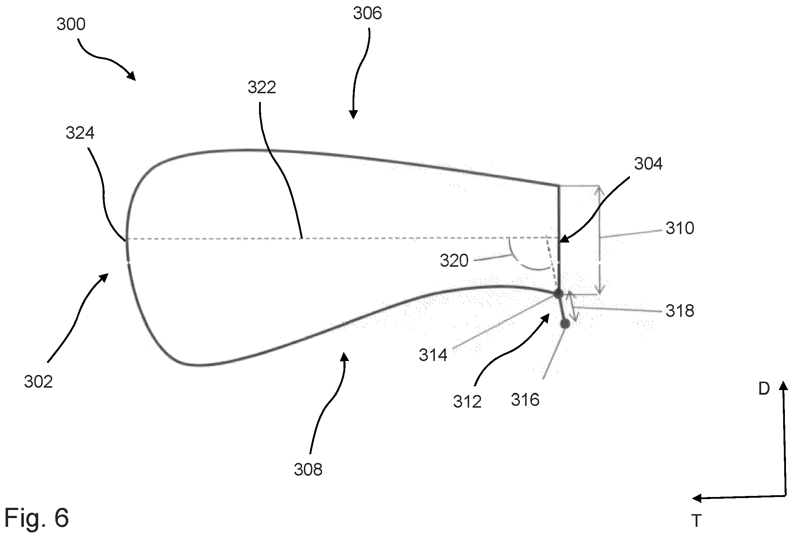

Figur 6 zeigt eine schematische, zweidimensionale Ansicht einer weiteren Ausführungsform eines Rotorblattes 300 mit einem Flatbackprofil. Das Rotorblatt 300 erstreckt sich in Rotorblatttiefe T von einer Vorderkante 302 hin zu einer Hinterkante 304. Das Rotorblatt 300 wird unter anderem durch eine Profilsehne 322 geometrisch beschrieben. Die Profilsehne 322 ist definiert als die Verbindungslinie zwischen dem Mittelpunkt der Hinterkante 304 und dem Punkt 324 der Vorderkante 302, der von dem Mittelpunkt der Hinterkante 304 die maximale Entfernung aufweist.

An der Vorderkante 302 weist das Profil eine gerundete Geometrie auf. An der Hinterkante 304 weist das Profil eine gerade Fläche auf. Die Hinterkante kann alternativ auch zwei oder mehr Flächen aufweisen, die gewinkelt zueinander angeordnet sind. Insbesondere kann die Hinterkante zwei Flächen aufweisen, die miteinander einen Winkel einschließen, wobei eine dieser Flächen einen Winkel mit der Druckseite und die andere Fläche einen Winkel mit der Saugseite einschließt. Diese Winkel bilden an der Druckseite und an der Saugseite insbesondere jeweils eine scharfe Endkante aus, an der die anliegende Strömung das Profil verlässt. Die Hinterkante kann auch gewölbt ausgebildet sein. Derartig ausgebildete Hinterkanten sind in vorteilhafter Weise entformbar. Ein solches Profil wird als Flatbackprofil bezeichnet, da die Hinterkante 304 im Wesentlichen flach ist. Bei einer derart ausgebildeten Hinterkante 304 kann die Dicke 310 der Hinterkante 304 unmittelbar durch die Beabstandung der Saugseite 306 und der Druckseite 308 ermittelt werden.

An dem Übergang von der Druckseite 308 zu der Hinterkante 304 ist die Gurney Flap 312 angeordnet. Die Gurney Flap 312 erstreckt sich von einem Wurzelpunkt 314 hin zu einem Spitzenpunkt 316. Der Wurzelpunkt 314 der Gurney Flap 312 ist an dem Rotorblatt 300 angeordnet. Der Spitzenpunkt 316 der Gurney Flap 312 ist als ein distales Ende der Gurney Flap 312 zu verstehen, und somit dem Rotorblatt 300 abgewandt.

Die Gurney Flap 312 weist eine Höhe 318 auf. Die Höhe 318 ist definiert als der Abstand zwischen dem Wurzelpunkt 314 und dem Spitzenpunkt 316. Die Anordnung der Gurney Flap 312 wird darüber hinaus durch einen Winkel 320 bestimmt. Der von der Vorderkante 302 ausgehend bestimmte Winkel 320 zwischen der Höhe 318 beziehungsweise der Richtung der Höhe 318 der Gurney Flap 312 und der Profilsehne 322 kann insbesondere zwischen 90° und 170° betragen. Im vorliegenden Ausführungsbeispiel beträgt der Winkel 320 circa 100°.

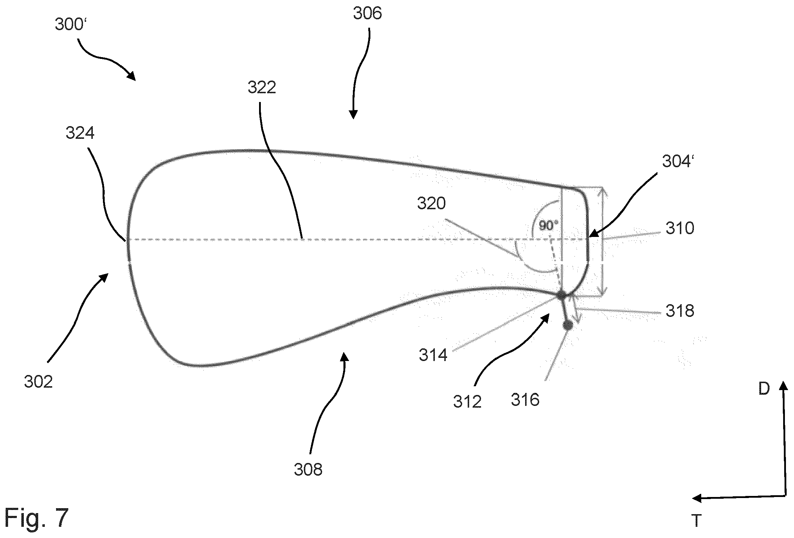

Das in Figur 7 gezeigte Rotorblatt 300' unterscheidet sich von dem in Figur 6 gezeigten Rotorblatt durch die Profilgeometrie an der Hinterkante 304'. Die Profilgeometrie zeichnet sich durch abgerundete Ecken aus. Die Dicke 310 der Hinterkante 304' wird als Abstand zwischen der Profilkontur der Druckseite 308 und der Profilkontur der Saugseite 306 orthogonal zu der Profilsehne 322 an der Stelle der Rotorblatttiefe T verstanden, an der im Betrieb eine freie Druckseitenströmung vorherrscht.

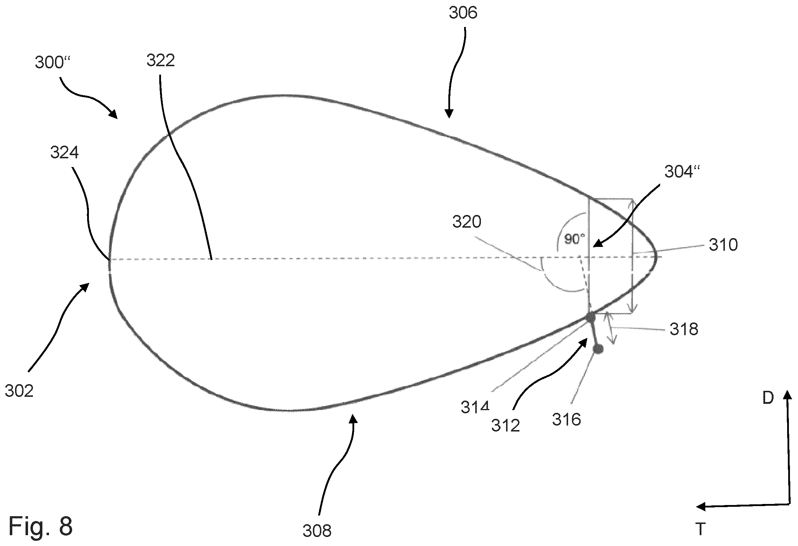

Figur 8 zeigt ein nicht erfindungsgemäßes Rotorblatt 300" mit einer geschlossenen Hinterkante 304". Die Dicke 310 der Hinterkante 304" ist als Abstand zwischen der Profilkontur der Druckseite 308 und der Profilkontur der Saugseite 306 orthogonal zu der Profilsehne 322 an der Stelle der Rotorblatttiefe T zu verstehen, an der im Betrieb eine freie Druckseitenströmung vorherrscht.

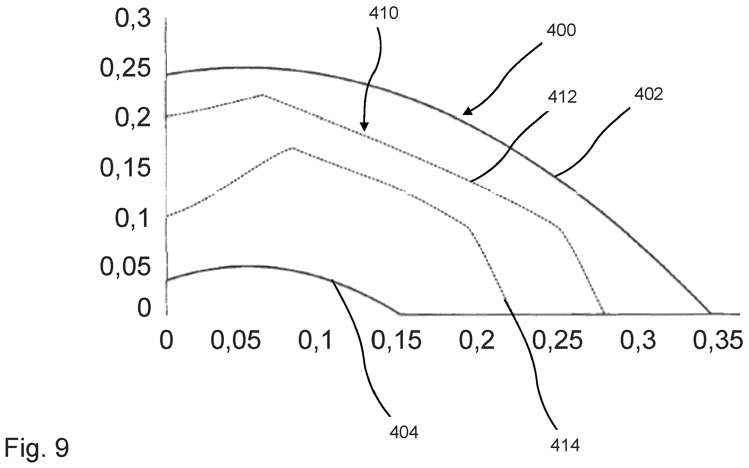

Figur 9 zeigt eine schematische Ansicht eines Auslegungsbereiches für das Verhältnis aus der Höhe 318 der Gurney Flap 312 und der Dicke 310 einer Hinterkante 304, 304', 304". Auf der Abszisse ist die relative Blattlänge in einem Wertebereich von 0% bis 35% aufgetragen. Auf der Ordinate ist das Verhältnis aus der Höhe 318 der Gurney Flap 312 und der Dicke 310 der Hinterkante 304, 304', 304" in einem Wertebereich zwischen 0% und 30 % aufgetragen.

In dem Diagramm ist ein erster Auslegungsbereich 400 dargestellt, der durch eine erste obere Grenzwertlinie 402 und eine erste untere Grenzwertlinie 404 definiert ist. Die obere Grenzwertlinie 402 des ersten Auslegungsbereichs 400 wird vorzugsweise durch den folgenden Zusammenhang charakterisiert:

$$f_{max}\left(\frac{r}{R}\right) = -2{,}7777 * \left(\frac{z}{Z}\right)^2 + 0{,}2813 * \left(\frac{z}{Z}\right) + 0{,}2421$$

Die untere Grenzwertlinie 404 des ersten Auslegungsbereichs 400 wird vorzugsweise durch den folgenden Zusammenhang charakterisiert:

$$f_{min}\left(\frac{r}{R}\right) = -5{,}148 * \left(\frac{z}{Z}\right)^2 + 0{,}5389 * \left(\frac{z}{Z}\right) + 0{,}0356$$

In diesen Zusammenhängen stellt r/R die relative Radiusposition dar, es handelt sich um die relative Radiusposition unter Berücksichtigung der Rotorblattnabe. Bezugslänge ist demnach der gesamte Rotorradius unter Berücksichtigung der Rotorblattnabe und der Rotorblattlänge. r ist beispielsweise die Beabstandung der betrachteten Position in Metern von der Rotationsachse des Rotors und R ist die Summe aus Rotorblattlänge und Abstand vom Blattflansch bis zur Rotationsachse. z/Z stellt in dem oben genannten Zusammenhang die relative Blattlänge dar. z ist beispielsweise die Beabstandung der betrachteten Position in Metern von dem Blattflansch und Z ist die Rotorblattlänge.

Der zweite Auslegungsbereich 410 ist innerhalb des ersten Auslegungsbereiches 400 angeordnet. Der zweite Auslegungsbereich wird durch die zweite obere Grenzwertlinie 412 und die zweite untere Grenzwertlinie 414 definiert.

BEZUGSZEICHEN

| | |
|---|---|
| 100 | Windenergieanlage |
| 102 | Turm |
| 104 | Gondel |
| 106 | Rotor |
| 108 | Rotorblätter |
| 110 | Spinner |
| 200 | Rotorblatt |
| 202 | Hinterkante |
| 204 | Rotorblattflansch |
| 206 | Druckseite |
| 210 | Kreiszylinderprofil |
| 212 | Flatbackprofil |
| 214 | Gurney Flap |
| 300, 300', 300" | Rotorblatt |
| 302 | Vorderkante |
| 304 | Hinterkante |
| 306 | Saugseite |
| 308 | Druckseite |
| 310 | Dicke der Hinterkante |

| 312 | Gurney Flap |
| 314 | Wurzelpunkt der Gurney Flap |
| 316 | Spitzenpunkt der Gurney Flap |
| 318 | Höhe der Gurney Flap |
| 320 | Winkel |
| 322 | Profilsehne |
| 324 | Vorderkantenpunkt |
| 400 | erster Auslegungsbereich |
| 402 | erste obere Grenzwertlinie |
| 404 | erste untere Grenzwertlinie |
| 410 | zweiter Auslegungsbereich |
| 412 | zweite obere Grenzwertlinie |
| 414 | zweite untere Grenzwertlinie |
| D | Rotorblattdicke |
| L | Rotorblattlänge |
| T | Rotorblatttiefe |

**Patentansprüche**

1. Rotorblatt (108, 200, 300, 300', 300") für eine Windenergieanlage (100) mit einer Rotorblattlänge (L), einer über die Rotorblattlänge (L) verlaufende Rotorblatttiefe (T), einer über die Rotorblattlänge (L) verlaufende Rotorblattdicke (D) und einer über die Rotorblattlänge (L) verlaufende Dicke (310) einer Hinterkante (202, 304) des Rotorblatts (108, 200, 300, 300', 300"), umfassend

   - eine Gurney Flap (214, 312) mit einer über die Rotorblattlänge (L) verlaufenden Höhe (318),
   - wobei das Rotorblatt (108, 200, 300, 300', 300") ein Flatbackprofil mit oder ohne abgerundete Kantenbereiche aufweist und die Dicke (310) der Hinterkante (202, 304) als Abstand zwischen einer Profilkontur der Druckseite (206, 308) und einer Profilkontur einer Saugseite (306) orthogonal zu einer Profilsehne (322) des Rotorblatts (108, 200, 300, 300', 300") definiert ist,
   **dadurch gekennzeichnet, dass** die Höhe (318) der Gurney Flap (214, 312) in Abhängigkeit der Dicke (310) der Hinterkante (202, 304) derart dimensioniert ist, dass ein Verhältnis aus der Höhe (318) der Gurney Flap (214, 312) und der Dicke (310) der Hinterkante (202, 304) zwischen größer 0% und 25%, insbesondere zwischen 5% und 25%, beträgt.

2. Rotorblatt (108, 200, 300, 300', 300") nach Anspruch 1,
   wobei das Verhältnis aus der Höhe (318) der Gurney Flap (214, 312) und der Dicke (310) der Hinterkante (202, 304) ausgehend von einem Rotorblattflansch (204) oder ausgehend von einem Bereich angrenzend an den Rotorblattflansch (204) auf einen Maximalwert ansteigt.

3. Rotorblatt (108, 200, 300, 300', 300") nach einem der vorherigen Ansprüche,
   wobei der Maximalwert des Verhältnisses aus der Höhe (318) der Gurney Flap (214, 312) und der Dicke (310) der Hinterkante (202, 304) zwischen 5% bis 15%, vorzugsweise zwischen 6% bis 12%, einer relativen Blattlänge erreicht wird.

4. Rotorblatt (108, 200, 300, 300', 300") nach einem der vorherigen Ansprüche,
   wobei die Gurney Flap (214, 312) zwischen 3% und 35% der relativen Blattlänge an dem Rotorblatt (108, 200, 300, 300', 300") angeordnet ist.

5. Rotorblatt (108, 200, 300, 300', 300") nach einem der vorherigen Ansprüche,
   wobei die Gurney Flap (214, 312) an einer Druckseite (206, 308) des Rotorblatts (108, 200, 300, 300', 300") angeordnet ist.

6. Rotorblatt (108, 200, 300, 300', 300") nach einem der vorherigen Ansprüche,
   wobei ein von einer der Hinterkante (202, 304) gegenüberliegend angeordneten Vorderkante (302) ausgehend bestimmter Winkel (320) zwischen der Höhe (318) der Gurney Flap (214, 312) und einer Profilsehne (322) des Rotorblatts (108, 200, 300, 300', 300") zwischen 90° und 170° beträgt, insbesondere mindestens 100°, vorzugsweise mindestens 110°.

7. Rotorblatt (108, 200, 300, 300', 300") nach einem der vorherigen Ansprüche,
wobei ein Verhältnis aus der Höhe (318) der Gurney Flap (214, 312) und der Rotorblatttiefe (T) an einer Position der Rotorblattlänge (L) mehr als 1%, mehr als 2% und/oder mehr als 5% beträgt.

8. Rotorblatt (108, 200, 300, 300', 300") nach einem der vorherigen Ansprüche,
wobei das Verhältnis aus der Höhe (318) der Gurney Flap (214, 312) und der Dicke (310) der Hinterkante (202, 304)

- in einem Bereich zwischen 0% und 5% der relativen Blattlänge zwischen 4% und 25%, insbesondere zwischen 10% und 21%, beträgt; und/oder
- in einem Bereich zwischen 5% und 10% der relativen Blattlänge zwischen 4% und 25%, insbesondere zwischen 12% und 22%, beträgt; und/oder
- in einem Bereich zwischen 10% und 15% der relativen Blattlänge zwischen 0% und 25%, insbesondere zwischen 13% und 20%, beträgt; und/oder
- in einem Bereich zwischen 15% und 20% der relativen Blattlänge zwischen 0% und 23%, insbesondere zwischen 10% und 18%, beträgt; und/oder
- in einem Bereich zwischen 20% und 25% der relativen Blattlänge zwischen 0% und 20%, insbesondere zwischen 0% und 15%, beträgt; und/oder
- in einem Bereich zwischen 25% und 30% der relativen Blattlänge zwischen 0% und 15%, insbesondere zwischen 0% und 10%, beträgt; und/oder
- in einem Bereich zwischen 30% und 35% der relativen Blattlänge zwischen 0% und 10% beträgt.

9. Rotorblatt (108, 200, 300, 300', 300") nach einem der vorherigen Ansprüche,
wobei das Rotorblatt (108, 200, 300, 300', 300") ein geschlossenes Profil aufweist und die Dicke (310) der Hinterkante (202, 304) als Abstand zwischen einer Profilkontur der Druckseite (206, 308) und einer Profilkontur der Saugseite (306) orthogonal zu der Profilsehne (322) an der Stelle der Rotorblatttiefe (T) definiert ist, an der im Betrieb eine freie Druckseitenströmung vorherrscht.

10. Rotorblatt (108, 200, 300, 300', 300") nach einem der vorherigen Ansprüche,

umfassend einen Übergangsbereich, wobei der Übergangsbereich aus einem Abschnitt mit einem Flatbackprofil und einem Abschnitt mit einem Kreiszylinderprofil besteht, wobei der Abschnitt mit dem Kreiszylinderprofil dem Rotorblattflansch (204) zugewandt ist, und
wobei die Gurney Flap (214, 312) in dem Übergangsbereich angeordnet ist.

11. Rotorblatt (108, 200, 300, 300', 300") nach einem der vorherigen Ansprüche, wobei sich die Gurney Flap (214, 312) in Richtung der Höhe (318) von einem Wurzelpunkt (314) zu einem Spitzenpunkt (316) erstreckt, und/oder die Gurney Flap (214, 312) orthogonal zu der Richtung der Höhe (318) eine Dicke aufweist, die im Wesentlichen parallel zu der Profilsehne des Rotorblatts (108, 200, 300, 300', 300") ausgerichtet ist, und/oder sich die Gurney Flap (214, 312) orthogonal zu der Richtung der Höhe (318) und orthogonal zu der Dicke in einer Längsrichtung erstreckt, und vorzugsweise durch die Erstreckung in Längsrichtung und die Höhe (318) eine flächige Erstreckung ausgebildet wird.

12. Rotorblatt (108, 200, 300, 300', 300") nach einem der vorherigen Ansprüche, umfassend einen Blattadapter und/oder eine Blattverlängerung, wobei der Blattadapter und/oder die Blattverlängerung den Rotorblattflansch (204) aufweist bzw. aufweisen.

13. Windenergieanlage (100), umfassend ein Rotorblatt (108, 200, 300, 300', 300") nach einem der vorherigen Ansprüche 1-12.

14. Windpark mit mindestens zwei Windenergieanlagen (100) nach Anspruch 13.

15. Verfahren zum Auslegen eines Rotorblatts (108, 200, 300, 300', 300") einer Windenergieanlage (100) mit einer Rotorblattlänge (L), einer über die Rotorblattlänge (L) verlaufende Rotorblatttiefe (T), einer über die Rotorblattlänge (L) verlaufende Rotorblattdicke (D) und einer über die Rotorblattlänge (L) verlaufende Dicke (310) einer Hinterkante (202, 304) des Rotorblatts (108, 200, 300, 300', 300"), umfassend eine Gurney Flap (214, 312) mit einer über die Rotorblattlänge (L) verlaufenden Höhe (318), wobei das Rotorblatt (108, 200, 300, 300', 300") ein Flatbackprofil mit oder ohne abgerundete Kantenbereiche aufweist und die Dicke (310) der Hinterkante (202, 304) als Abstand zwischen einer Profilkontur der Druckseite (206, 308) und einer Profilkontur einer Saugseite (306) orthogonal zu einer Profilsehne (322) des Rotorblatts (108, 200, 300, 300', 300") definiert ist, und wobei die Höhe (318) der Gurney Flap (214, 312) in Abhängigkeit der Dicke (310) der Hinterkante (202, 304) derart dimensioniert wird, dass ein Verhältnis aus der Höhe (318) der Gurney Flap (214, 312) und der Dicke (310) der Hinterkante (202, 304) zwischen größer 0% und 25%, insbesondere zwischen 5% und 25%, beträgt.

**Claims**

1. A rotor blade (108, 200, 300, 300', 300") for a wind turbine (100), having a rotor blade length (L), having a rotor blade depth (T) which extends over the rotor blade length (L), having a rotor blade thickness (D) which extends over the rotor blade length (L), and having a thickness (310) of a trailing edge (202, 304) of the rotor blade (108, 200, 300, 300', 300"), which thickness extends over the rotor blade length (L), said rotor blade comprising

   - a Gurney flap (214, 312), which has a height (318) which extends over the rotor blade length (L),
   - wherein the rotor blade (108, 200, 300, 300', 300") has a flat back profile with or without rounded edge regions, and the thickness (310) of the trailing edge (202, 304) is defined as the distance between a profile contour of the pressure side (206, 308) and a profile contour of a suction side (306) orthogonal to the profile chord (322),
   - **characterized in that** the height (318) of the Gurney flap (214, 312) is dimensioned according to the thickness (310) of the trailing edge (202, 304) in such a way that a ratio of the height (318) of the Gurney flap (214, 312) and the thickness (310) of the trailing edge (202, 304) is between greater than 0% and 25%, in particular between 5% and 25%.

2. The rotor blade (108, 200, 300, 300', 300") as claimed in claim 1, wherein, proceeding from a rotor blade flange (204) or proceeding from a region adjoining the rotor blade flange (204), the ratio of the height (318) of the Gurney flap (214, 312) and the thickness (310) of the trailing edge (202, 304) increases to a maximum value.

3. The rotor blade (108, 200, 300, 300', 300") as claimed in either of the preceding claims, wherein the maximum value of the ratio of the height (318) of the Gurney flap (214, 312) and the thickness (310) of the trailing edge (202, 304) is attained between 5% and 15%, preferably between 6% and 12%, of a relative blade length.

4. The rotor blade (108, 200, 300, 300', 300") as claimed in one of the preceding claims, wherein the Gurney flap (214, 312) is arranged on the rotor blade (108, 200, 300, 300', 300") between 3% and 35% of the relative blade length.

5. The rotor blade (108, 200, 300, 300', 300") as claimed in one of the preceding claims, wherein the Gurney flap (214, 312) is arranged on a pressure side (206, 308) of the rotor blade (108, 200, 300, 300', 300").

6. The rotor blade (108, 200, 300, 300', 300") as claimed in one of the preceding claims, wherein an angle (320) between the height (318) of the Gurney flap (214, 312) and a profile chord (322) of the rotor blade (108, 200, 300, 300', 300"), which angle is determined proceeding from a leading edge (302), which is arranged opposite the trailing edge (202, 304), is between 90° and 170°, in particular is at least 100°, preferably is at least 110°.

7. The rotor blade (108, 200, 300, 300', 300") as claimed in one of the preceding claims, wherein, at a position of the rotor blade length (L), a ratio of the height (318) of the Gurney flap (214, 312) and the rotor blade depth (T) is greater than 1%, greater than 2% and/or greater than 5%.

8. The rotor blade (108, 200, 300, 300', 300") as claimed in one of the preceding claims, wherein the ratio of the height (318) of the Gurney flap (214, 312) and the thickness (310) of the trailing edge (202, 304)

   - is between 4% and 25%, in particular between 10% and 21%, in a range between 0% and 5% of the relative blade length; and/or
   - is between 4% and 25%, in particular between 12% and 22%, in a range between 5% and 10% of the relative blade length; and/or
   - is between 0% and 25%, in particular between 13% and 20%, in a range between 10% and 15% of the relative blade length; and/or
   - is between 0% and 23%, in particular between 10% and 18%, in a range between 15% and 20% of the relative blade length; and/or

- is between 0% and 20%, in particular between 0% and 15%, in a range between 20% and 25% of the relative blade length; and/or
- is between 0% and 15%, in particular between 0% and 10%, in a range between 25% and 30% of the relative blade length; and/or
- is between 0% and 10% in a range between 30% and 35% of the relative blade length.

**9.** The rotor blade (108, 200, 300, 300', 300") as claimed in one of the preceding claims, wherein the rotor blade (108, 200, 300, 300', 300") has a closed profile, and the thickness (310) of the trailing edge (202, 304) is defined as the distance between a profile contour of the pressure side (206, 308) and a profile contour of the suction side (306) orthogonal to the profile chord (322) at that point of the rotor blade depth (T) at which a free pressure-side flow prevails during operation.

**10.** The rotor blade (108, 200, 300, 300', 300") as claimed in one of the preceding claims,

comprising a transition region, wherein the transition region consists of a section with a flat back profile and a section with a circular-cylindrical profile, wherein the section with the circular-cylindrical profile faces the rotor blade flange (204), and
wherein the Gurney flap (214, 312) is arranged in the transition region.

**11.** The rotor blade (108, 200, 300, 300', 300") as claimed in one of the preceding claims, wherein the Gurney flap (214, 312) extends in a direction of the height (318) from a root point (314) to a tip point (316), and/or the Gurney flap (214, 312) has, orthogonal to the direction of the height (318), a thickness which is oriented substantially parallel to the profile chord of the rotor blade (108, 200, 300, 300', 300"), and/or the Gurney flap (214, 312) extends in a longitudinal direction orthogonally to the direction of the height (318) and orthogonally to the thickness, and an areal extent is preferably formed by the extent in the longitudinal direction and the height (318).

**12.** The rotor blade (108, 200, 300, 300', 300") as claimed in one of the preceding claims, comprising a blade adapter and/or a blade extension, wherein the blade adapter and/or the blade extension have/has the rotor blade flange (204).

**13.** A wind turbine (100) comprising a rotor blade (108, 200, 300, 300', 300") as claimed in one of the preceding claims 1-12.

**14.** A wind farm having at least two wind turbines (100) as claimed in claim 13.

**15.** A method for designing a rotor blade (108, 200, 300, 300', 300") of a wind turbine (100), having a rotor blade length (L), having a rotor blade depth (T) which extends over the rotor blade length (L), having a rotor blade thickness (D) which extends over the rotor blade length (L), and having a thickness (310) of a trailing edge (202, 304) of the rotor blade (108, 200, 300, 300', 300"), which thickness extends over the rotor blade length (L), said rotor blade comprising a Gurney flap (214, 312), which has a height (318) which extends over the rotor blade length (L), wherein the rotor blade (108, 200, 300, 300', 300") has a flat back profile with or without rounded edge regions, and the thickness (310) of the trailing edge (202, 304) is defined as the distance between a profile contour of the pressure side (206, 308) and a profile contour of a suction side (306) orthogonal to the profile chord (322), and
wherein the height (318) of the Gurney flap (214, 312) is dimensioned according to the thickness (310) of the trailing edge (202, 304) in such a way that a ratio of the height (318) of the Gurney flap (214, 312) and the thickness (310) of the trailing edge (202, 304) is between greater than 0% and 25%, in particular between 5% and 25%.

**Revendications**

**1.** Pale de rotor (108, 200, 300, 300', 300") d'une éolienne (100) avec une longueur de pale de rotor (L), une profondeur de pale de rotor (T) s'étendant sur la longueur de pale de rotor (L), une épaisseur de pale de rotor (D) s'étendant sur la longueur de pale de rotor de rotor (L) et une épaisseur (310) s'étendant sur la longueur de pale de rotor (L) d'un bord de fuite (202, 304) de la pale de rotor (108, 200, 300, 300', 300"), comprenant

- un volet de Gurney (214, 312) avec une hauteur (318) s'étendant sur la longueur de pale de rotor (L),
- dans laquelle la pale de rotor (108, 200, 300, 300', 300") présente un profil à dos plat, avec ou sans zones de bord arrondies, et l'épaisseur (310) du bord de fuite (202, 304) est définie comme la distance entre un contour du profil du côté de pression (206, 308) et un contour du profil d'un côté d'aspiration (306), orthogonalement à une corde de profil (322) de la pale de rotor (108, 200, 300, 300', 300"),

**caractérisée en ce que** la hauteur (318) du volet de Gurney (214, 312) est dimensionnée en fonction de l'épaisseur (310) du bord de fuite (202, 304), de telle manière qu'un rapport entre la hauteur (318) du volet de Gurney (214, 312) et l'épaisseur (310) du bord de fuite (202, 304) se situe entre 0 % et 25 %, en particulier entre 5 % et 25 %.

2. Pale de rotor (108, 200, 300, 300', 300") selon la revendication 1,
   dans laquelle le rapport entre la hauteur (318) du volet de Gurney (214, 312) et l'épaisseur (310) du bord de fuite (202, 304) augmente à une valeur maximale en partant d'une bride de pale de rotor (204) ou en partant d'une zone adjacente à la bride de pale de rotor (204).

3. Pale de rotor (108, 200, 300, 300', 300") selon l'une quelconque des revendications précédentes,
   dans laquelle la valeur maximale du rapport entre la hauteur (318) du volet de Gurney (214, 312) et l'épaisseur (310) du bord de fuite (202, 304) se situe entre 5 % et 15 %, de préférence entre 6 % et 12 %, d'une longueur de pale relative.

4. Pale de rotor (108, 200, 300, 300', 300") selon l'une quelconque des revendications précédentes,
   dans laquelle le volet de Gurney (214, 312) est disposé entre 3 % et 35 % de la longueur de pale relative sur la pale de rotor (108, 200, 300, 300', 300").

5. Pale de rotor (108, 200, 300, 300', 300") selon l'une quelconque des revendications précédentes,
   dans laquelle le volet de Gurney (214, 312) est disposé sur un côté de pression (206, 308) de la pale de rotor (108, 200, 300, 300', 300").

6. Pale de rotor (108, 200, 300, 300', 300") selon l'une quelconque des revendications précédentes,
   dans laquelle un angle (320), déterminé d'un bord d'attaque (302) disposé en regard du bord de fuite (202, 304), entre la hauteur (318) du volet de Gurney (214, 312) et une corde de profil (322) de la pale de rotor (108, 200, 300, 300', 300") se situe entre 90° et 170°, en particulier est égal à au moins 100°, de préférence au moins 110°.

7. Pale de rotor (108, 200, 300, 300', 300") selon l'une quelconque des revendications précédentes,
   dans laquelle un rapport entre la hauteur (318) du volet de Gurney (214, 312) et la profondeur de pale de rotor (T) sur une position de la longueur de pale de rotor (L) est supérieur à 1 %, supérieur à 2 % et/ou supérieur à 5 %.

8. Pale de rotor (108, 200, 300, 300', 300") selon l'une quelconque des revendications précédentes,
   dans laquelle le rapport entre la hauteur (318) du volet de Gurney (214, 312) et l'épaisseur (310) du bord de fuite (202, 304)

   - se situe dans une plage entre 0 % et 5 % de la longueur de pale relative, entre 4 % et 25 %, en particulier entre 10 % et 21 % ; et/ou
   - se situe dans une plage entre 5 % et 10 % de la longueur de pale relative, entre 4 % et 25 %, en particulier entre 12 % et 22 % ; et/ou
   - se situe dans une plage entre 10 % et 15 % de la longueur de pale relative, entre 0 % et 25 %, en particulier entre 13 % et 20 % ; et/ou
   - se situe dans une plage entre 15 % et 20 % de la longueur de pale relative, entre 0 % et 23 %, en particulier entre 10 % et 18 % ; et/ou
   - se situe dans une plage entre 20 % et 25 % de la longueur de pale relative, entre 0 % et 20 %, en particulier entre 0 % et 15 % ; et/ou
   - se situe dans une plage entre 25 % et 30 % de la longueur de pale relative, entre 0 % et 15 %, en particulier entre 0 % et 10 % ; et/ou
   - se situe dans une plage entre 30 % et 35 % de la longueur de pale relative entre 0 % et 10 %.

9. Pale de rotor (108, 200, 300, 300', 300") selon l'une quelconque des revendications précédentes,
   dans laquelle la pale de rotor (108, 200, 300, 300', 300") présente un profil fermé et l'épaisseur (310) du bord de fuite (202, 304) est définie comme une distance entre un contour de profil du côté de pression (206, 308) et un contour de profil du côté d'aspiration (306) orthogonalement à la corde de profil (322) sur l'endroit de la profondeur de pale de rotor (T) sur lequel un écoulement libre de côté de pression prédomine lors du fonctionnement.

10. Pale de rotor (108, 200, 300, 300', 300") selon l'une quelconque des revendications précédentes,

comprenant une zone de transition, dans laquelle la zone de transition est constituée d'une section avec un profil à dos plat et d'une section avec un profil cylindrique circulaire, dans laquelle la section avec le profil cylindrique circulaire est tournée vers la bride de pale de rotor (204), et

dans laquelle le volet de Gurney (214, 312) est disposé dans la zone de transition.

11. Pale de rotor (108, 200, 300, 300', 300") selon l'une quelconque des revendications précédentes, dans laquelle le volet de Gurney (214, 312) s'étend dans la direction de la hauteur (318) d'un point de racine (314) à un point de pointe (316), et/ou le volet de Gurney (214, 312) présente, orthogonalement à la direction de hauteur (318), une épaisseur qui est orientée de manière sensiblement parallèle à la corde de profil de la pale de rotor (108, 200, 300, 300', 300") et/ou le volet de Gurney (214, 312) s'étend, orthogonalement à la direction de la hauteur (318) et orthogonalement à l'épaisseur, dans une direction longitudinale, et de préférence une extension plate est formée par l'extension dans la direction longitudinale et la hauteur (318).

12. Pale de rotor (108, 200, 300, 300', 300") selon l'une quelconque des revendications précédentes, comprenant un adaptateur de pale et/ou une rallonge de pale, dans laquelle l'adaptateur de pale et/ou la rallonge de pale présente/présentent la bride de pale de rotor (204).

13. Éolienne (100) comprenant une pale de rotor (108, 200, 300, 300', 300") selon l'une quelconque des revendications précédentes 1 à 12.

14. Parc éolien avec au moins deux éoliennes (100) selon la revendication 13.

15. Procédé de conception d'une pale de rotor (108, 200, 300, 300', 300") d'une éolienne (100) avec une longueur de pale de rotor (L), une profondeur de pale de rotor (T) s'étendant sur la longueur de pale de rotor (L), une épaisseur de pale de rotor (D) s'étendant sur la longueur de pale de rotor (L) et une épaisseur (310), s'étendant sur la longueur de pale de rotor (L), d'un bord de fuite (202, 304) de la pale de rotor (108, 200, 300, 300', 300"), comprenant un volet de Gurney (214, 312) avec une hauteur (318) s'étendant sur la longueur de pale de rotor (L), dans lequel la pale de rotor (108, 200, 300, 300', 300") présente un profil à dos plat avec ou sans zones de bord arrondies, et l'épaisseur (310) du bord de fuite (202, 304) est définie comme la distance entre un contour de profil du côté de pression (206, 308) et un contour de profil du côté d'aspiration (306), orthogonalement à une corde de profil (322) de la pale de rotor (108, 200, 300, 300', 300"), et

dans lequel la hauteur (318) du volet de Gurney (214, 312) est dimensionnée en fonction de l'épaisseur (310) du bord de fuite (202, 304), de telle manière qu'un rapport entre la hauteur (318) du volet de Gurney (214, 312) et l'épaisseur (310) du bord de fuite (202, 304) se situe entre plus de 0 % et 25 %, en particulier entre 5 % et 25 %.

Fig. 1

Fig. 2

EP 3 969 743 B1

Fig. 3

Fig. 4

EP 3 969 743 B1

Fig. 5

EP 3 969 743 B1

Fig. 6

Fig. 7

EP 3 969 743 B1

Fig. 8

Fig. 9

EP 3 969 743 B1

**IN DER BESCHREIBUNG AUFGEFÜHRTE DOKUMENTE**

**In der Beschreibung aufgeführte Patentdokumente**

- DE 202016101461 U1
- US 20150267681 A1
- WO 2016055076 A1
- US 2019024627 A1
- DE 102015012427 A1
- WO 2015185062 A1